# EUROPÄISCHE PATENTSCHRIFT

(11) **EP 2 714 370 B1**
(45) Veröffentlichungstag und Bekanntmachung des Hinweises auf die Patenterteilung: **11.05.2016**
(21) Anmeldenummer: 12730815.3
(22) Anmeldetag: 30.05.2012
(51) Int. Cl.: B29C 49/42, B65G 21/20, B65G 51/03

(54) **VERFAHREN UND VORRICHTUNG ZUM TRANSPORT VON GEGENSTÄNDEN ZU EINER STATION**
METHOD AND APPARATUS FOR TRANSPORTING ARTICLES TO A STATION
PROCÉDÉ ET DISPOSITIF PERMETTANT LE TRANSPORT D'OBJETS VERS UNE STATION

(30) Priorität: 03.06.2011 DE 102011050843
(43) Veröffentlichungstag der Anmeldung: 09.04.2014
(73) Patentinhaber: Nov Hau AG Engineering, 8274 Tägerwilen (CH)
(72) Erfinder: NOVAK, Peter, CH-8274 Tägerwilen (CH)
(74) Vertreter: Patentanwälte und Rechtsanwalt Weiß, Arat & Partner mbB
(86) Internationale Anmeldenummer: PCT/EP2012/060174
(87) Internationale Veröffentlichungsnummer: WO 2012/163978

(56) Entgegenhaltungen:
- EP-A1- 1 106 545
- EP-A2- 0 790 200
- JP-A- 2001 088 207
- US-A- 5 853 080
- US-B2- 7 028 857

## Beschreibung

Die Erfindung betrifft ein Verfahren zum Transport von Gegenständen zu einer Station, insbesondere von Preforms zu einer Blasvorrichtung, wobei jeder Gegenstand einen Vorsprung aufweist und durch ein Antriebsmittel entlang einer Führung bewegt wird, sowie eine Vorrichtung hierfür.

### Stand der Technik

Nach dem gegenwärtigen Stand der Technik werden Gegenstände entweder über Gravitationsverfahren mit einem Rollensortierer und einer erhöhten Rutsche zu einer nachfolgenden Bearbeitungseinrichtung gefördert (WO 02/36466 A1) oder durch Schleuderverfahren auf einer drehenden Scheibe oder Ring orientiert und mittels einer aktiv angetriebenen Förderstrecke od. dgl. zur nachfolgenden Bearbeitungsstation gefördert (WO 2004/069700 A1, US 2008/0113055 A1, EP 1 690 813 A1).

In diesem Zusammenhang wird auf die US 5,170,879 A verwiesen, welche eine Fördereinrichtung für PET-Flaschen offenbart, welche über ein Schienensystem eine Führung von PET-Flaschen ermöglicht.

Ausserdem wird auf die US 5,853,080 A verwiesen, welche eine Flaschenhalshalterung für PET-Flaschen offenbart, wobei die Flaschen an einem Ringflansch klemmend gehalten werden, um sie weiterzubearbeiten.

Beispielsweise zeigt die US 7 322 458 B1 die Möglichkeit auf, die einzelnen Gegenstände in Kammern, die auf Förderbändern eingerichtet sind, zu vereinzeln.

Nach der DE 10 2009 016 593 A1 geschieht die Vereinzelung in einer zellenradähnlichen Übergabeeinrichtung.

Bei der US 2008/0142337 A1 werden einzelne Preforms zwischen umlaufenden Bändern eingelegt, wobei zwei Bänder dem Ausrichten der Preforms und ein darunter angeordnetes Band dem Transport dienen.

Nach der US 2008/0142339 A1 werden Preforms in Mulden eines Transportrades vereinzelt.

Den nächstliegenden Stand der Technik zeigt die EP 1 690 813 A1, nach der Preforms od.dgl. Gegenstände auf einen Drehteller gelangen und in einem umlaufenden Schlitz zwischen Leitwänden und Drehteller gefangen werden.

Bei allen bekannten Vorrichtungen und Verfahren treten bei immer höher werdenden Geschwindigkeiten (30.000 bis 80.000 Preforms pro Stunde und mehr) starke Schwankungen der Prozessgeschwindigkeit auf, was lange Pufferstrecken vor der nachfolgenden Bearbeitungsmaschine, beispielsweise der Blasmaschine, fordert. Ferner kommt es zu Störungen bzw. Stillstand der Anlage durch falsch orientierte und/oder verklemmte Preforms. Bisher wird versucht, den Prozess zu stabilisieren, die Störelemente zu eliminieren und mittels teurer Sensorik und aufwendigen Regelungen diesen heiklen und hochdynamischen Prozess zu steuern/regeln. Insbesondere bei allen Schleuderverfahren zeigt sich, dass es besonders diffizil ist, technisch zu garantieren, dass Preforms, welche die Scheibe bzw. den Ring verlassen, auch richtig orientiert und positioniert sind. Weiter treten bei Überdosierung auf der Scheibe bzw. dem Ring örtliche Anhäufungen von Preforms auf, welche das Orientieren der Preforms stören und dadurch die Ausbringungsleistung der Scheibe ungenügend macht. Dauert die Überdosierung zu lange, führt dies oft zur Überfüllung der Scheibe bzw. des Rings und schliesslich zum Kollaps des Systems.

Weiter zeigt sich, dass bei Förderleistungen ab ca. 60.000 Preforms pro Stunde die Reaktivität/Reaktionsgeschwindigkeit dieser Regelmechanismen und die Trägheit des Systems kritisch werden. Ein weiteres Problem besteht darin, aus einem Vorratsbehälter, welcher die Preforms als Schüttgut enthält, eine homogen dosierte Menge an Preforms zu entnehmen und dem Folgesystem zuzuführen. Verpackungsfrische Preforms weisen eine hohe gegenseitige Haftwirkung auf, was zu Klumpenbildung und Anhäufung von Preforms führt. Folglich fördern solche Dosier- und Zuführsysteme die Preforms meist sehr unstetig, puls- und klumpenartig.

Ein weiteres Problem besteht darin, dass der Blasprozess der PET-Flaschenerzeugung störungsbedingt manchmal den sofortigen Stopp der Preformzufuhr zur Streckblasmaschine erzwingt. Die Streckblasmaschine läuft auf Hochtouren (Sollwert) weiter, ohne aber dabei Flaschen zu blasen (Leerlauf). Nach Behebung der Störung wird der Prozess ohne Anfahrrampe sofort mit Sollwert wieder aufgenommen. Bei hohen Förderleistungen führt die Trägheit des Zuführsystems oft zu Schwierigkeiten, so dass wiederum lange Pufferstrecken benötigt werden, um diese zu kompensieren. Bei immer höher werdenden Förderleistungen (60.000 Preforms pro Stunde und mehr) ist dies fast nicht mehr zuverlässig zu bewerkstelligen.

### Aufgabe

Aufgabe der vorliegenden Erfindung ist es, diese oben erwähnten Nachteile zu beseitigen und ein Verfahren und eine Vorrichtung der o.g. Art zu entwickeln, das/die sich durch sehr hohe Leistungsfähigkeit und Einfachheit auszeichnet, insbesondere durch ein selbstregulierendes Verhalten des Systems hervorsticht, die sich dynamisch anpassen, sich selber steuern/regeln, stets in Bewegung bleiben und den Preformstrom glätten und homogenisieren, was hohe Zuverlässigkeit und Reaktivität bei hohen Förderleistungen ermöglicht. Das ganze soll auch noch kostengünstig realisierbar sein.

### Lösung der Aufgabe

Zur Lösung der Aufgabe führt zum einen, dass entlang von zumindest einem Teil der Führung der Gegenstand durch einen Luftstrom an einer Anlage gehalten und entlang dieser Anlage weitertransportiert wird.

Diese sogenannte Luftweiche ist so konzipiert, dass die Gegenstände/Preforms über eine bestimmte Länge, nur einseitig getragen, durch einen Saugstrom im Gleichgewicht gehalten und mit einer laufenden Schiene mit einer nach oben gerichteten scharfen Kante angetrieben werden. Die laufende Schiene ist nur ein Beispiel für ein bewegbares Leitelement. Sie kann auch durch eine entsprechend gestaltete Kette oder Riemen ersetzt werden. Auch der Saugstrom bietet nur eine bevorzugte Möglichkeit. Denkbar wäre auch, dass die Gegenstände mit Luft gegen eine Anlage gedrückt und dieser Luftstrom abgeschaltet wird, sobald ein Stau detektiert wird. Sobald sich der Stau auflöst, kann dann die Druckluft wieder angestellt werden. Oder die Gegenstände werden bei einem Stau aus dem Bereich der Druckluft herausgedrückt. Hier sind weitere Möglichkeiten denkbar, die von der vorliegenden Erfindung umfasst sein sollen.

Das bewegbare Leitelement trägt und treibt die Gegenstände an. Der Saugstrom an beispielsweise einem Schlitz in einem Gehäuse der Luftweiche kompensiert das durch die einseitig tragende Kraft auftretende Kippmoment und hält die Gegenstände im Gleichgewicht auf dem bewegbaren Leitelement. Dabei werden die Gegenstände an dem Gehäuse oder einer ähnlichen Anlage oder einem separaten Anschlag entlang geführt.

Die Kompensation/Wirkung durch den Saugstrom ist jedoch begrenzt. Ist ein Gegenstand falsch orientiert, falsch positioniert oder der Schubdruck der nachfolgenden Gegenstände zu gross, kann das stabile Gleichgewicht nicht gewahrt werden und der Gegenstand lenkt sich selbst aus dem Hauptstrom der Gegenstände aus, so dass der Saugstrom nicht mehr wirksam wird und der Gegenstand herunterfällt. Er kann dann wieder in einem internen Kreislauf zurück auf den Drehteller geführt werden.

Durch das Zusammenwirken von feststehendem Leitelement und bewegbarem Leitelement in der Führung wird bewirkt, dass der Gegenstand in eine Rotation um seine Längsachse versetzt wird. Dies gibt ihm einen Drall mit, der dafür sorgt, dass der Gegenstand beim Überqueren der Luftweiche in einer stabilen "Fluglage" bleibt (Kreiseleffekt).

Somit erfüllt die Luftweiche im wesentlichen folgende drei Hauptfunktionen:
1. Sie limitiert den Schubdruck, welcher rückwärts über die freie Strecke/Luftweiche übertragen werden kann. Sie wirkt wie ein Überdruckventil:
   - Ist der Schubdruck zu gross, brechen die Gegenstände von selber aus, bis der Schubdruck abgebaut ist;
   - Ist kein oder nur wenig Schubdruck vorhanden, können alle richtig orientierten und richtig positionierten Gegenstände die freie Strecke/Luftweiche überqueren und gelangen in den Eintrittsbereich der Transport- und Staustrecke.
2. Sie eliminiert falsch positionierte und/oder falsch orientierte Preforms, sowie Stecklinge aus dem Hauptstrom der Gegenstände.
3. Sie erhöht das dynamische Reaktionsvermögen des Systems wesentlich dadurch, dass der zur Luftweiche führende Strom der Gegenstände immer in Bewegung gehalten werden kann, sogar in Fällen, wenn die Transport- und Staustrecke voll belegt ist und/oder der abführende Strom der Gegenstände angehalten wird. Es sind nur kleine Pufferlängen nötig, die dann wieder beschleunigt werden müssen.

Wird über längere Zeit der Strom der Gegenstände zu der nachfolgenden Bearbeitungsmaschine angehalten, kann bei der Unterdruckversorgung der Luftweiche ein Bypass mechanisch geöffnet werden, um die Saugwirkung der Luftweiche zu unterbrechen. Damit wird erreicht, dass der gesamte Strom der Gegenstände an der Luftweiche schubdrucklos umgelenkt wird und in einen internen Rücklauf gelangt.

Konzeptionell ist dafür gesorgt, dass das System (interner Kreislauf mit Orientierungsprozess) stets in Bewegung bleiben kann. Die Trägheit des Systems beim Wiederanlauf ist somit eliminiert. Die Luftweiche lenkt den Preformstrom, ohne diesen anzuhalten, nur um, nämlich entweder in die Transport- und Staustrecke oder in den internen Kreislauf. Dieses System ist durch das natürliche Eigenverhalten auch bei hohen Förderleistungen in der Lage, den Strom von Gegenständen ohne Verzögerung der nachfolgenden Bearbeitungsmaschine zu Verfügung zu stellen.

Hervorzuheben ist vor allem, dass keine Sensoren, Regelung und Mechanik mit bewegten Teilen benötigt wird, um den Schaltvorgang der Luftweiche zu steuern. Ist Platz in der Transport- und Staustrecke, welche vor dem Einlauf/Eintritt/Taktrad der nachfolgenden Bearbeitungsmaschine positioniert ist, vorhanden, gehen die richtig eingereihten Gegenstände diesen Weg. Ist die Strecke voll, kann dieser Weg nicht eingeschlagen werden, da der Platz durch die schon eingereihten Gegenstände belegt ist. Die nachfolgenden Gegenstände weichen selbständig aus. Letztere gelangen in den internen Kreislauf/Rücklauf und wiederholen den vorangegangenen Vereinzelungsprozess. Die Transport- und Staustrecke wird stets bis zur Luftweiche, welche beim Eintritt zur Transport- und Staustrecke angeordnet ist, mit Gegenständen gefüllt und alle überschüssigen Gegenstände werden hier laufend abgewiesen.

Im übrigen ist daran gedacht, den Saugstrom nicht nur seitlich auf die Gegenstände wirken zu lassen. Denkbar ist auch, dass die Gegenstände vom Saugstrom nach oben angezogen werden, wobei nachfolgende Gegenstände, welche auf bereits in der Staustrecke sich befindliche Gegenstände treffen, seitlich ausgelenkt werden und aus dem Bereich des Saugstroms gelangen. Hier sind viele Möglichkeiten denkbar und sollen von der vorliegenden Erfindung umfasst sein.

Nach der Luftweiche in der Staustrecke sollten die dort möglicherweise sich stauenden Gegenstände noch zusätzlich durch einen Niederhalter und ggf. durch eine dritte seitliche Federung gehalten werden.

Die Führung der Gegenstände selbst geschieht mittels des feststehenden und des bewegbaren Leitelements. Dieser Antrieb ist nur einseitig und reibschlüssig und wird durch das bewegbare Leitelement erzeugt.

Durch den gewählten Antrieb mit dem bewegbaren Leitelement im Zusammenwirken mit dem feststehenden Leitelement werden die Gegenstände nur an zwei Punkten gehalten, bei Preforms vorzugsweise unter dem Vorsprung/Ringkragen. Die Anordnung gewährleistet, dass der Gegenstand um die Kante der laufenden Schiene und/oder entlang dieser gedreht wird und auf dem feststehenden Leitelement abdreht. Der Gegenstand wird nicht formschlüssig gehalten, sondern steht in reibschlüssigem Kontakt mit dem bewegbaren Leitelement. Hierdurch wird bei der Geschwindigkeit des bewegbaren Leitelements der Gegenstand in Rotation versetzt.

Das bewegbare Leitelement und das feststehende Leitelement können zueinander einen Höhenversatz aufweisen, jedoch ist der Abstand zwischen ihnen auf jeden Fall kleiner als der Durchmesser des Vorsprungs/Ringkragens. Durch entsprechende Neigung der Leitelemente zueinander kann der Gegenstand in jeder gewünschten Ausrichtung im Raum gebracht und gehalten werden.

Auch die Vereinzelungseinrichtung kann der beschleunigten Transportmöglichkeit der Gegenstände angepasst werden. Die Verbesserung besteht vor allem darin, dass der Drehteller von einer Leitwand zumindest teilweise aber nicht vollständig umfangen ist, welche einen grösseren Radius aufweist, als der Drehteller. Damit befindet sich die Leitwand ausserhalb des Drehtellers. Bevorzugt setzt sich die Leitwand dann in das feststehende Leitelement der Führung fort.

Durch die Anordnung der Leitwand ausserhalb des Drehtellers wird gewährleistet, dass der Gegenstand leicht in den schrägen Spalt zwischen Leitwand und Drehteller hineinfällt, eine stabile Lage einnimmt und es seltener hier zu einem Verklemmen kommt. Hierzu ist ferner vorgesehen, dass die Leitwand gegenüber dem Drehteller auch vertikal versetzt ist. Der Versatz soll so geschehen, dass die Gegenstände in einer stabilen Schräglage von ca. 45° ± 20° weiter transportiert werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine perspektivische Ansicht einer erfindungsgemässen Vorrichtung zum Transport von Gegenständen zu einer Station, wobei die Station selbst nicht gezeigt ist;
**Figur 2** eine Draufsicht auf die erfindungsgemässe Vorrichtung gemäss Figur 1;
**Figur 3** eine schematische und teilweise perspektivisch dargestellte schräge Draufsicht auf eine Vereinzelungseinrichtung;
**Figur 4** einen vergrössert dargestellten Schnitt durch einen Teilbereich der Vereinzelungseinrichtung gemäss Figur 3;
**Figur 5** eine perspektivische Ansicht auf einen Teilausschnitt einer erfindungsgemässen Führung für die Gegenstände;
**Figur 6** eine perspektivische Teilansicht eines Teilbereichs der Führung gemäss Figur 5;
**Figur 7** einen perspektivisch dargestellten Schnitt durch einen weiteren Teilbereich der Führung.

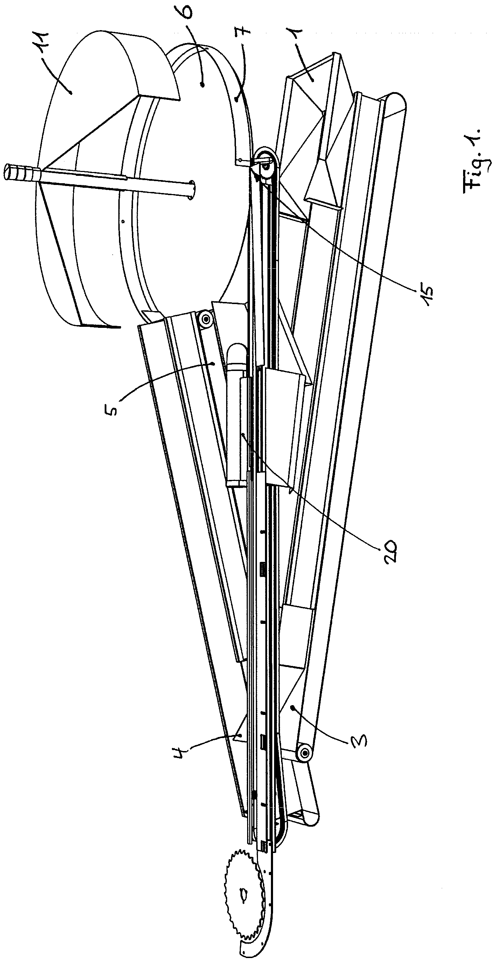

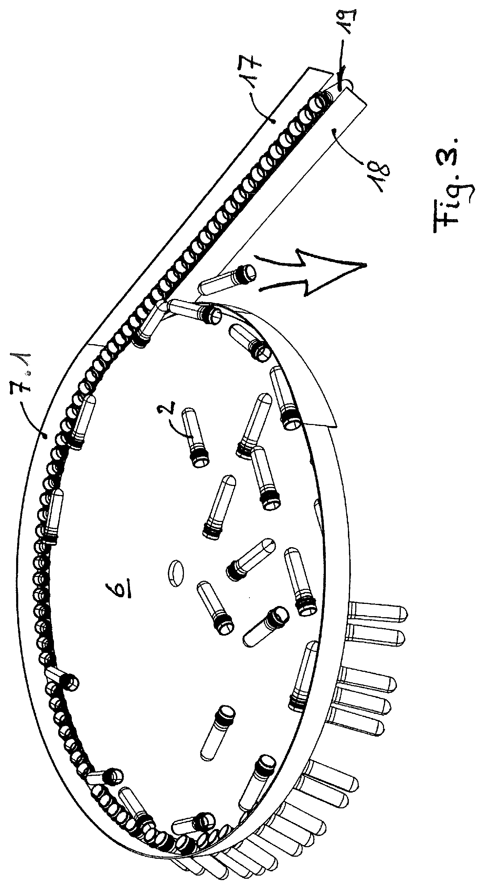

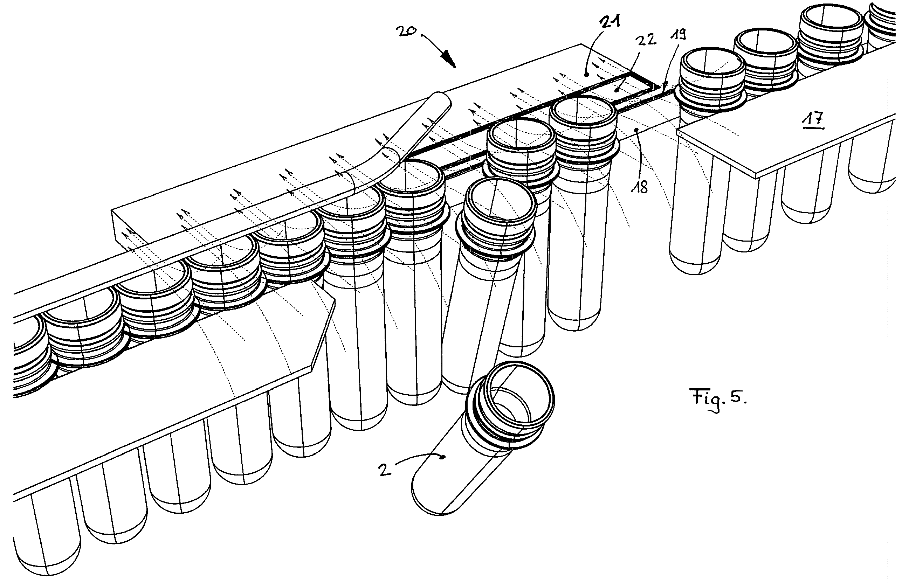

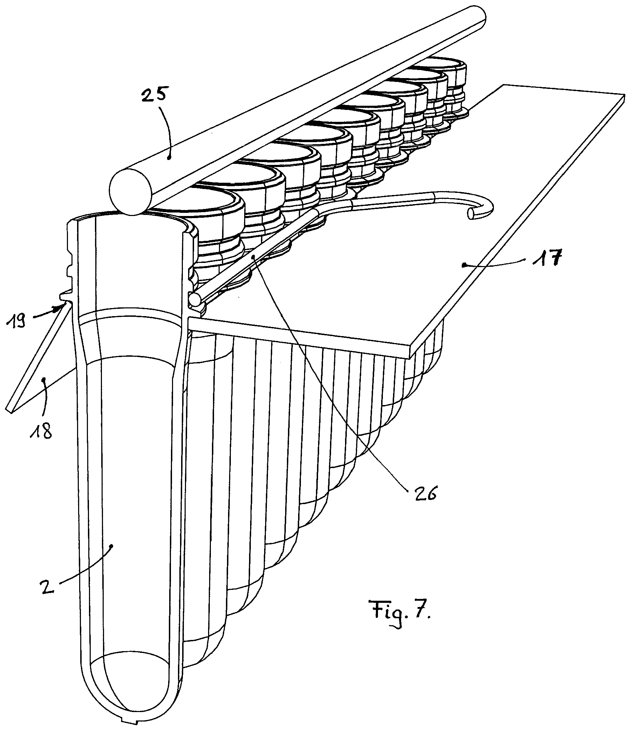

Eine erfindungsgemässe Vorrichtung zum Transport von in Figur 1 nicht näher gezeigten Gegenständen zu einer ebenfalls nicht näher gezeigten Station weist einen Schütttrichter 1 auf, aus dem die Gegenstände 2, wie sie insbesondere in den Figuren 3 bis 7 gezeigt sind, auf einen nach oben ausgerichteten Schrägförderer 3 gelangen. Von diesem Schrägförderer 3 werden die Gegenstände 2 durch ein Leitblech 4 auf einen weiteren Schrägförderer 5 übergeleitet, von dem die Gegenstände auf einen Drehteller 6 gelangen. Dabei durchbricht der Schrägförderer 5 eine Leitwand 7 oder ist direkt über dieser Leitwand 7 angeordnet. Dies gewährleistet, dass ein Abstand der Mündung des Schrägförderers 5 so tief wie möglich über dem Drehteller 6 angeordnet ist, so dass die Gegenstände keine grosse Höhe beim freien Fall auf den Drehteller 6 überbrücken müssen. Durch die erfindungsgemässe Anordnung der Elemente Schrägförderer 3, Leitblech 4 und Schrägförderer 5 wird die klumpen- und pulsartig zugeführte Gegenständemenge homogenisiert und geglättet.

Zur näheren Beschreibung des Drehtellers wird insbesondere auf die EP 1 690 813 verwiesen.

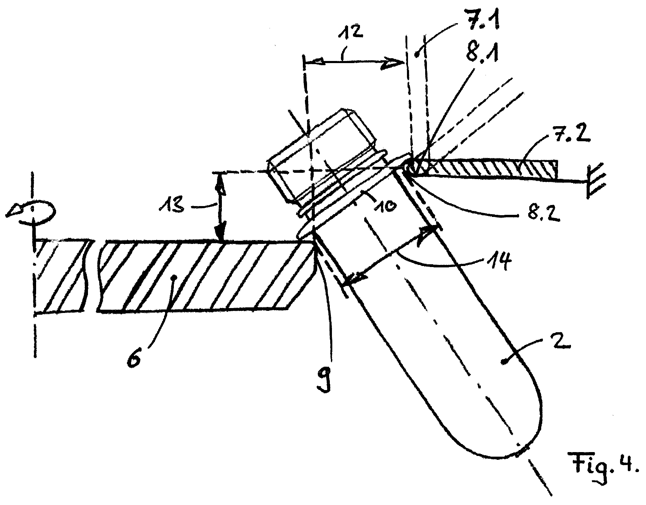

Wichtig ist das Verhältnis von Drehteller 6 zu Leitwand 7. In Figur 3 ist eine Leitwand 7.1 vertikal aufgestellt und umfängt den Drehteller 6. Dagegen ist eine Leitwand 7.2 in Figur 4 waagerecht angeordnet. Stellungen dazwischen sind möglich. Wesentlich bei der vorliegenden Erfindung ist, dass die Leitwand 7.1 bzw. 7.2 mit ihrer unteren bzw. inneren Randkante 8.1 bzw. 8.2 sowohl mit einem horizontalen Versatz 12 als auch mit einem vertikalen Versatz 13 gegenüber einer Umfangskante 9 des Drehtellers 6 angeordnet ist. D.h., die Leitwand 7.1, 7.2 ist koaxial zum Drehteller 6, jedoch ausserhalb von diesem angeordnet. Das entsprechende Spaltmass 14 ist kleiner, als der Durchmesser eines Ringkragens 10 des Gegenstandes und bevorzugt um den ganzen Drehteller herum konstant. Auf diese Weise werden die orientierten Gegenstände in einer stabilen Schräglage (ca. 45° ± 20°) transportiert.

Da der Schrägförderer 5 seitlich und relativ tief zu dem Drehteller 6 angeordnet ist, besteht nun die Möglichkeit, den gesamten Drehteller und somit die gesamte Vereinzelungseinrichtung mittels einer Haube 11 abzudecken. Diese Haube 11 ist bevorzugt vertikal bewegbar, wobei sie durch entsprechende Kraftspeicher in ihrer vertikalen Bewegung unterstützt wird. Sie bewirkt, dass einerseits die Vereinzelung selbst in einem abgeschlossenen Raum stattfindet, so dass der Lärm gedämmt wird, keine Gegenstände nach draussen geschleudert werden können, der Prozess und die Personen geschützt sind sowie kein Schmutz aus der Umgebung auf den Drehteller gelangt.

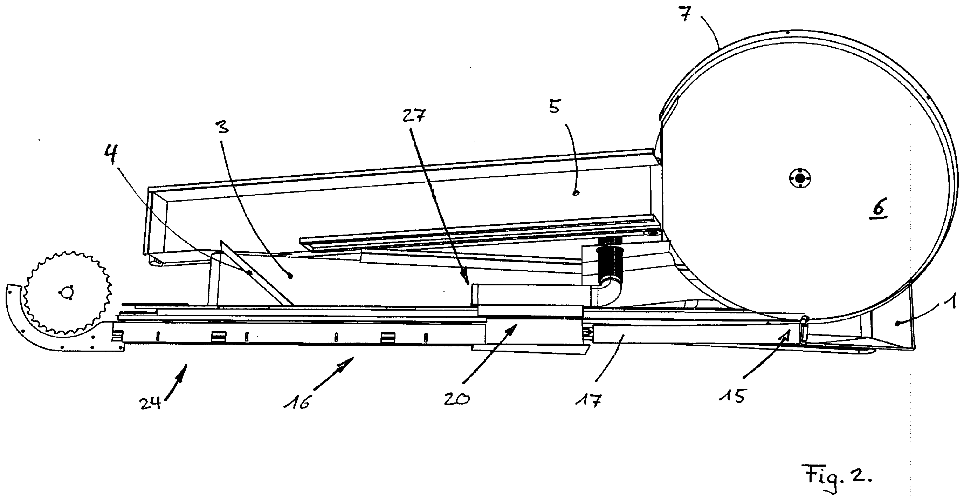

Nachdem die Gegenstände in dem durch das Spaltmass 14 definierten Spalt zwischen Drehteller und Leitwand 7 gefangen wurden, werden sie in einem Überleitungsbereich 15 (siehe Figur 2) an eine Führung 16 übergeben. Gleichzeitig kann nahe diesem Überleitungsbereich 15 auch ein Bereich vorgesehen sein, an dem nicht gefangene Gegenstände wieder ausgeschleust werden. Insbesondere bei voller Belegung des Spaltes zwischen Drehteller und Leitwand durch Gegenstände, kreisen alle überzähligen Gegenstände auf einer inneren Bahn auf dem Drehteller und werden nahe dem Überleitungsbereich 15 durch das zumindest teilweise Fehlen der Leitwand 7 im darauffolgenden Sektor des Drehtellers ausgeschleust und dem Schrägförderer 3 zurückgeführt.

In der Führung 16 ist ein feststehendes Leitelement 17 vorgesehen, welches den Ringkragen 10 untergreift. Dieses feststehende Leitelement 17 ist schienenartig ausgebildet. Bevorzugt ist es, wie oben erwähnt, eine einfache Fortsetzung der Leitwand 7 in gerader Richtung.

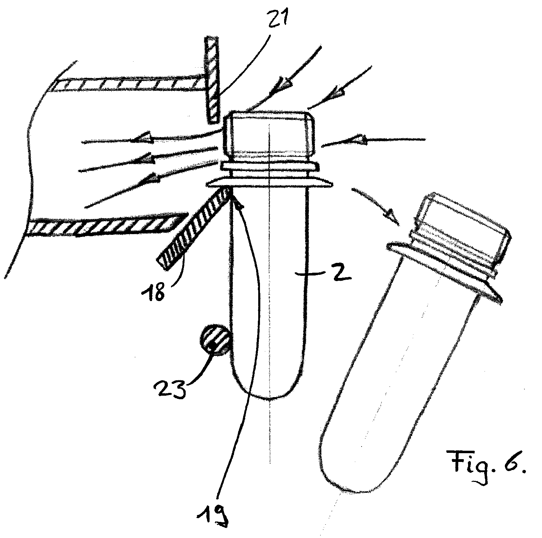

Das feststehende Leitelement 17 wirkt mit einem bewegbaren Leitelement 18 (siehe Figur 6) zusammen. Auch dieses untergreift mit einer Randkante 19 den Ringkragen 10 des Gegenstands 2. Hierdurch wird der Gegenstand an nur zwei Punkten und nicht formschlüssig gehalten, sondern er steht in reibschlüssigem Kontakt mit dem bewegbaren Leitelement 18. Hierdurch wird bewirkt, dass der Gegenstand in eine Rotation um seine Längsachse versetzt wird. Dieser Kreiseleffekt stabilisiert den Transport des Gegenstandes.

Der Abstand zwischen dem feststehenden Leitelement 17 und dem bewegbaren Leitelement 18 ist grösser als der Durchmesser des Gegenstands, allerdings kleiner als der Durchmesser des Ringkragens.

Das bewegbare Leitelement 18 kann horizontal, vertikal oder in allen Zwischenpositionen geneigt dazu angeordnet werden.

Kernstück der vorliegenden Erfindung ist eine sogenannte Luftweiche 20 im Bereich der Führung 16. Vor dieser Luftweiche 20 endet das feststehende Leitelement 17, während das bewegbare Leitelement 18 weiterläuft.

In der Luftweiche 20 ist ein Gehäuse 21 mit einem Schlitz 22 vorgesehen. In dem Gehäuse 21 wird ein Unterdruck bzw. ein Saugstrom erzeugt, welcher, wie in Figur 6 angedeutet, bewirkt, dass der Gegenstand 2 mit seinem Ringkragen zu dem Schlitz 22 hin gezogen bzw. auf dem bewegbaren Leitelement 18 gehalten wird. Dabei kann sich der untere Teil des Körpers des Gegenstandes 2 noch gegen einen Anschlag 23 abstützen.

Die Funktionsweise dieser erfindungsgemässen Luftweiche ist folgende:

Stauen sich nach der Luftweiche die Gegenstände in der weiteren Führung, die aus einer Fortsetzung des feststehenden Leitelementes 17 und dem bewegbaren Leitelement 18 besteht, so werden überzählige Gegenstände und alle Gegenstände, welche für die weitere Verarbeitung nicht richtig orientiert, nicht richtig positioniert sind oder ineinander stecken (Stecklinge), ausgeschieden. Der Staudruck in der Luftweiche bewirkt, dass diese Gegenstände von dem bewegbaren Leitelement abgestreift bzw. von nachfolgenden Gegenständen weggedrückt werden, so dass sie aus dem Bereich des Saugstroms gelangen und abfallen. Dies ist darauf zurückzuführen, dass die Gegenstände im Bereich der Luftweiche nur einseitig transportiert werden und nur durch den Saugstrom und eine Kante im Gleichgewicht gehalten werden können. Der Saugstrom wirkt vor allem auf die Kopfpartie des Gegenstandes, wird diese weggedrückt, so unterliegt der Gegenstand nur noch der Schwerkraft. Dieser ganze Prozess ist selbstregulierend, lediglich der Saugstrom bzw. der Unterdruck kann prozess- und/oder gegenstandstypabhängig reguliert werden. Löst sich der Stau auf, erfolgt ein Transport der Gegenstände völlig ungehindert. Bei definierten Prozesszuständen kann ein z.B. mechanisch betätigter Luftbypass 27 geöffnet werden, sodass alle Gegenstände an der Luftweiche abgewiesen werden.

Alle Gegenstände 2, welche nach der Luftweiche 20 entlang der Führung 16 transportiert werden, gelten als richtig orientiert und richtig positioniert. Demzufolge wird die Lage der Gegenstände durch einen dritten Niederhalter 25 für den weiteren Transport bis zur Blasmaschine gesichert.

Der Transport der Gegenstände entlang der Führung 16 erfolgt erfindungsgemäss mit geringem Schubdruck. Für die prozesssichere Übergabe der Gegenstände an die Blasmaschine ist jedoch ein gewisses Mass an Schubdruck nötig. Deswegen weist die Führung 16 kurz vor dem Übergang zum Taktrad der Blasmaschine eine Schuberzeugungseinrichtung 24 auf, welche eine ortsfeste, gefederte Anpresskontur 26 beinhaltet, die den Gegenstand vorzugsweise oberhalb des Vorsprungs 10 berührt und den Gegenstand gegen das bewegbare Leitelement 18 presst. Dadurch ist die vom bewegbaren Leitelement 18 auf den Gegenstand durch Reibung übertragbare Kraft entsprechend grösser und dieser angepresste Gegenstand übt dementsprechend auf die stromabwärts in Richtung der Blasmaschine aufgestauten Gegenstände den benötigten Schubdruck aus.

**Bezugszeichenliste**

| | | | | | |
|---|---|---|---|---|---|
| 1 | Schütttrichter | 34 | | 67 | |
| 2 | Gegenstand | 35 | | 68 | |
| 3 | Schrägförderer | 36 | | 69 | |
| 4 | Leitblech | 37 | | 70 | |
| 5 | Schrägförderer | 38 | | 71 | |
| 6 | Drehteller | 39 | | 72 | |
| 7 | Leitwand | 40 | | 73 | |
| 8 | Untere Randkante | 41 | | 74 | |
| 9 | Umfangskante | 42 | | 75 | |
| 10 | Ringkragen | 43 | | 76 | |
| 11 | Haube | 44 | | 77 | |
| 12 | Horizontaler Versatz | 45 | | 78 | |
| 13 | Vertikaler Versatz | 46 | | 79 | |
| 14 | Spaltmass | 47 | | | |
| 15 | Überleitungsbereich | 48 | | | |
| 16 | Führung | 49 | | | |
| 17 | Leitelement | 50 | | | |
| 18 | Bewegbares Leitelement | 51 | | | |
| 19 | Randkante | 52 | | | |
| 20 | Luftweiche | 53 | | | |
| 21 | Gehäuse | 54 | | | |
| 22 | Schlitz | 55 | | | |
| 23 | Anschlag | 56 | | | |
| 24 | Schuberzeuger | 57 | | | |
| 25 | Niederhalter | 58 | | | |
| 26 | Gefederte Anpresskontur | 59 | | | |
| 27 | Luftbypass | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Transport von Gegenständen (2) zu einer Station, insbesondere von Preforms zu einer Blasvorrichtung, wobei jeder Gegenstand einen Vorsprung (10) aufweist und durch ein Antriebsmittel entlang einer Führung (16) bewegt wird, wobei entlang von zumindest einem Teil der Führung (16) der Gegenstand (2) durch einen Luftstrom an einer Anlage (19, 21, 23) gehalten und entlang dieser Anlage weitertransportiert wird, wobei der Gegenstand (2) nur einseitig getragen wird und durch einen Saugstrom im Gleichgewicht gehalten und mit einer laufenden Schiene mit einer nach oben gerichteten scharfen Kante angetrieben wird, wobei der Saugstrom das durch die einseitig tragende Kraft auftretende Kippmoment kompensiert und den Gegenstand (2) im Gleichgewicht auf dem bewegbaren Leitelement (18) hält.

2. Verfahren nach Anspruch 1, **dadurch gekennzeichnet, dass** der Gegenstand (2) gegen die Anlage (19, 21,23) angesaugt oder durch Druckluft angepresst wird.

3. Verfahren nach Anspruch 1 oder 2, **dadurch gekennzeichnet, dass** der Vorsprung (10) an dem Gegenstand (2) in einem Schlitz (22) in der Anlage (21) aufgenommen und/oder auf einer Randkante (19) eines bewegbaren Leitelements (18) als Teil der Führung gehalten wird.

4. Verfahren nach wenigstens einem der Ansprüche 1 bis 3, **dadurch gekennzeichnet, dass** die Gegenstände (2) während des Transports um ihre Längsachse gedreht werden.

5. Vorrichtung zum Transport von Gegenständen (2) zu einer Station, insbesondere von Preforms zu einer Blasvorrichtung, wobei jeder Gegenstand einen Vorsprung (10) aufweist und durch ein Antriebsmittel (18) entlang einer Führung (16) bewegbar ist, wobei entlang von zumindest einem Teil der Führung (16) eine Einrichtung (20) zur Erzeugung eines auf die Gegenstände einwirkenden Luftstroms vorgesehen ist, **dadurch gekennzeichnet, dass** der Luftstrom ein Saugstrom ist, welcher die Gegenstände (2) im Gleichgewicht auf dem bewegbaren Leitelement (18) hält, wobei die Gegenstände (2) über eine bestimmte Länge nur einseitig tragbar sind und mit einer laufenden Schiene mit einer nach oben gerichteten scharfen Kante angetrieben sind, wobei der Saugstrom das durch die einseitig tragende Kraft auftretende Kippmoment kompensiert.

6. Vorrichtung nach Anspruch 5, **dadurch gekennzeichnet, dass** der Luftstrom durch einen Schlitz (22) strömt.

7. Vorrichtung nach Anspruch 6, **dadurch gekennzeichnet, dass** der Schlitz (22) der Aufnahme des Vorsprungs (10) an dem Gegenstand (2) dient.

8. Vorrichtung nach wenigstens einem der Ansprüche 5 bis 7, **dadurch gekennzeichnet, dass** die Führung (16) mindestens ein feststehendes Leitelement (17) und ein bewegbares Leitelement (18) aufweist.

9. Vorrichtung nach Anspruch 8, **dadurch gekennzeichnet, dass** beide Leitelemente (17,18) den Vorsprung (10) an dem Gegenstand (2) untergreifen.

10. Vorrichtung nach Anspruch 8 oder 9, **dadurch gekennzeichnet, dass** das bewegbaren Leitelement (18) schräg gegen den Vorsprung (10) an dem Gegenstand (2) angestellt ist.

11. Vorrichtung nach wenigstens einem der Ansprüche 8 bis 10, **dadurch gekennzeichnet, dass** das bewegbare Leitelement (18) eine laufende Schiene ist.

12. Vorrichtung nach Anspruch 11, **dadurch gekennzeichnet, dass** der Gegenstand (2) über den Vorsprung (10) in einem reibschlüssigen Kontakt mit einer Kante (19) der laufenden Schiene steht.

13. Vorrichtung nach wenigstens einem der Ansprüche 8 bis 12, **dadurch gekennzeichnet, dass** das feststehenden Leitelement (17) und das bewegbare Leitelement (18) zueinander einen Höhenversatz aufweisen.

## Claims

1. A method for transporting articles (2) to a station, in particular preforms to a blowing apparatus, wherein each article has a projection (10) and is moved along a guide (16) by a drive device,
wherein, along at least part of the guide (16), the article (2) is held by an air stream against an installation (19, 21, 23) and is transported further along this installation,
wherein the article (2) is held only on one side and is kept in equilibrium by a suction stream and is driven by a moving track having an upwardly directed sharp edge,
wherein the suction stream compensates for the tilting moment that arises as a result of the one-sided holding force and keeps the article (2) in equilibrium on the movable guide element (18).

2. A method according to Claim 1, **characterised in that** the article (2) is drawn by suction against the installation (19, 21, 23) or is pressed against it by compressed air.

3. A method according to Claim 1 or 2, **characterised in that** the projection (10) on the article (2) is received in a slot (22) in the installation (21) and/or is held on a marginal edge (19) of a movable guide element (18), as part of the guide.

4. A method according to at least one of Claims 1 to 3, **characterised in that** the articles (2) are turned about their longitudinal axis during transport.

5. An apparatus for transporting articles (2) to a station, in particular preforms to a blowing apparatus, wherein each article has a projection (10) and is movable along a guide (16) by a drive device (18), wherein, along at least part of the guide (16), a device (20) for generating an air stream that acts on the articles is provided, **characterised in that** the air stream is a suction stream which keeps the articles (2) in equilibrium on the movable guide element (18), wherein the articles (2) may be held only on one side over a certain length and are driven by a moving track having an upwardly directed sharp edge, wherein the suction stream compensates for the tilting moment that arises as a result of the one-sided holding force.

6. An apparatus according to Claim 5, **characterised in that** the air stream flows through a slot (22).

7. An apparatus according to Claim 6, **characterised in that** the slot (22) serves to receive the projection (10) on the article (2).

8. An apparatus according to at least one of Claims 5 to 7, **characterised in that** the guide (16) has at least a fixed guide element (17) and a movable guide element (18).

9. An apparatus according to Claim 8, **characterised in that** both guide elements (17, 18) reach underneath the projection (10) on the article (2).

10. An apparatus according to Claim 8 or 9, **characterised in that** the movable guide element (18) is placed obliquely against the projection (10) on the article (2).

11. An apparatus according to at least one of Claims 8 to 10, **characterised in that** the movable guide element (18) is a moving track.

12. An apparatus according to Claim 11, **characterised in that**, by way of the projection (10), the article (2) is in frictional contact with an edge (19) of the moving track.

13. An apparatus according to at least one of Claims 8 to 12, **characterised in that** the fixed guide element (17) and the movable guide element (18) are at a height offset in relation to one another.

## Revendications

1. Procédé permettant le transport d'objets (2) vers une station, en particulier de préformes vers un dispositif de soufflage, chaque objet présentant une saillie (10) et étant déplacé par un moyen d'entraînement le long d'un guide (16),
dans lequel l'objet (2) est, le long d'au moins une partie du guide (16), maintenu par un flux d'air contre une surface d'appui (19, 21, 23) et transporté en avant le long de cette surface d'appui, l'objet (2) n'étant porté que d'un côté et étant maintenu en équilibre par un flux d'aspiration et étant entraîné par un rail continu à arête vive orientée vers le haut, le flux d'aspiration compensant le couple de basculement se produisant par la force portante unilatérale et maintenant l'objet (2) en équilibre sur l'élément de guidage mobile (18).

2. Procédé selon la revendication 1, **caractérisé par le fait que** l'objet (2) est aspiré ou pressé contre la surface d'appui (19, 21, 23) par de l'air comprimé.

3. Procédé selon la revendication 1 ou 2, **caractérisé par le fait que** la saillie (10) sur l'objet (2) est reçue dans une fente (22) dans la surface d'appui (21) et/ou est maintenue sur un bord (19) d'un élément de guidage mobile (18) comme partie du guide.

4. Procédé selon au moins l'une des revendications 1 à 3, **caractérisé par le fait que** les objets (2) sont, pendant le transport, tournés autour de leur axe longitudinal.

5. Dispositif permettant le transport d'objets (2) vers une station, en particulier des préformes vers un dispositif de soufflage, chaque objet présentant une saillie (10) et pouvant être déplacé par un moyen d'entraînement (18) le long d'un guide (16), le long d'au moins une partie du guide (16) étant prévu un moyen (20) pour générer un flux d'air agissant sur les objets, **caractérisé par le fait que** le flux d'air est un flux d'aspiration qui maintient les objets (2) en équilibre sur l'élément de guidage mobile (18), les objets (2) ne pouvant être portés que d'un côté sur une longueur déterminée et étant entraînés par un rail continu avec une arête vive orientée vers le haut, le flux d'aspiration compensant la force portante unilatérale se produisant par suite du couple de basculement.

6. Dispositif selon la revendication 5, **caractérisé par le fait que** le flux d'air circule à travers une fente (22).

7. Dispositif selon la revendication 6, **caractérisé par le fait que** la fente (22) sert à recevoir la saillie (10) sur l'objet (2).

8. Dispositif selon au moins l'une des revendications 5 à 7, **caractérisé par le fait que** le guide (16) présente au moins un élément de guidage stationnaire (17) et un élément de guidage mobile (18).

9. Dispositif selon la revendication 8, **caractérisé par le fait que** les deux éléments de guidage (17, 18) viennent en prise par-dessous la saillie (10) sur l'objet (2).

10. Dispositif selon la revendication 8 ou 9, **caractérisé par le fait que** l'élément de guidage mobile (18) est placé obliquement contre la saillie (10) sur l'objet (2).

11. Dispositif selon au moins l'une des revendications 8 à 10, **caractérisé par le fait que** l'élément de guidage mobile (18) est un rail continu.

12. Dispositif selon la revendication 11, **caractérisé par le fait que** l'objet (2) est, par l'intermédiaire de la saillie (10), en contact par friction avec un bord (19) du rail continu.

13. Dispositif selon au moins l'une des revendications 8 à 12, **caractérisé par le fait que** l'élément de guidage stationnaire (17) et l'élément de guidage mobile (18) présentent entre eux un décalage en hauteur.
